(19) **Europäisches Patentamt**

**European Patent Office**

**Office européen des brevets**

(11) Veröffentlichungsnummer: **0 352 414**
**A1**

(12) **EUROPÄISCHE PATENTANMELDUNG**

(21) Anmeldenummer: **89108010.3**

(22) Anmeldetag: **03.05.89**

(51) Int. Cl.⁴: **A47J 37/04 , A47J 37/07**

(30) Priorität: **26.07.88 CS 5299/88**

(43) Veröffentlichungstag der Anmeldung:
**31.01.90 Patentblatt 90/05**

(84) Benannte Vertragsstaaten:
**AT DE FR IT NL**

(71) Anmelder: **DRUPOL, vyrobni druzstvo**
**Hybernska 30**
**Praha 1(CS)**

(72) Erfinder: **Rápek, Václav**
**Jabkenická 543**
**Praha 9(CS)**
Erfinder: **Apeltauer, Jan**
**Konevova 240**
**Praha 3(CS)**
Erfinder: **Kolisko, Bohumil**
**Kláry Zetkinové 878**
**Praha 10(CS)**

(74) Vertreter: **Patentanwälte Beetz sen. - Beetz**
**jun. Timpe - Slegfried - Schmitt-Fumian-**
**Mayr**
**Steinsdorfstrasse 10**
**D-8000 München 22(DE)**

(54) **Brat- und Grillrost mit selbsttätigem Antrieb.**

(57) Die Erfindung betrifft einen Brat- und Grillrost mit selbsttätigem Antrieb des Spießes durch ein Schaufelrad (8), das im Auslaßbereich der erwärmten Gase gelagert und mit der Welle des Spießes 6 drehfest verbunden ist. Die Heizquelle (10) insbesondere für feste Brennstoffe, wie Holzkohle, ist an der Innenwand des Gehäusemantels (2) angeordnet und zweckmäßig als herausnehmbares Magazin (11) ausgeführt, welches mit einem Manipulationshandgriff (12) versehen ist. Das ermöglicht eine einfache Belüftung des Brennstoffes durch Handbewegungen. Zur Erhöhung der thermodynamischen Wirkung des austretenden Gasstromes ist das Schaufelrad (8) mit einer Umfangsabdeckung (9) versehen.

Der erfindungsgemäße selbsttätige Antrieb ist auch bei anderen Typen der Bratrostanordnungen mit den abweichenden Heizquellen anwendbar.

Fig. 3

## Brat- und Grillrost mit selbsttätigem Antrieb

Die Erfindung betrifft einen Bratrost mit drehangetriebenem Spieß, besonders zur Anwendung im Freien.

Bekannte Bratrosteinrichtungen mit drehangetriebenem Spieß sind auf der elektrischen Quelle entweder aus dem Netz oder aus Akkumulatoren oder Batterien abhängig. Als Energiequellen werden Kraftfahrzeugbatterien oder eingebaute Akkus verwendet, die gegebenenfalls mit einem Kurbeltrieb kombiniert sein können. Nachteile dieser Lösungen liegen in der Abhängigkeit von einer Energiequelle, im höheren technischen Aufwand durch Zusatzgeräte, neben höheren Herstellungs- und Betriebskosten auch in einer beschränkten Verfügbarkeit.

Bei gebräuchlichen Bratrosteinrichtungen für Gartenbetrieb ist der Heizraum zur Aufnahme meist fester Brennstoffe, wie Holzkohle oder Holz, regelmäßig unter dem Grillgut angeordnet, so daß das flüssige Fett auf das Heizmittel tropft und unter Entwicklung von Rauch verbrennt. Das Fett und der Saft können für die Warenzubereitung nicht ausgenutzt werden und durch deren Verbrennung entwickeln sich unangenehmer Geruch und Rauch. Für einen möglichst gleichmäßigen Brat- bzw. Grillvorgang ist eine gleichmäßig verteilte Glut anzustreben, deren Aufrechterhaltung eine gezielte periodische oder kontinuierliche Luftzufuhr durch Blasen oder einen Ventilator bzw. Blasebalg erfordert.

Aufgabe der Erfindung ist es, einen Brat- oder Grillrost zu schaffen, der die Nachteile des Standes der Technik vermeidet und einen selbsttätigen Drehantrieb des Spießes mit einfachsten technischen Mitteln ohne zusätzliche Energiequelle ermöglicht

Diese Aufgabe gemäß der Erfindung wird dadurch gelöst, daß den Rotationsantrieb des Spießes ein Schaufelrad bildet, welches im Auslaßbereich der erhitzten Gase aus dem Innenraum des Gehäuses angeordnet und wirkungsmäßig mit der Welle des Spießes verbunden ist.

Gemäß einer Ausgestaltung des Bratrostes ist sein Heiz-bzw. Feuerraum für feste Brennstoffe, z. B. für Holzkohle, an der Innenseite des Gehäusemantels gegenüber dem Bratgut angeordnet und als herausnehmbares Magazin aus dem Gitterwerk ausgebildet, welches mit einem Manipulationshandgriff versehen ist. Die thermodynamische Wirkung der erwärmten Gase, welche aus dem Manteloberteil des Bratrostes heraustreten, wird dadurch erhöht, daß das Schaufelrad mit einer Umfangsabdeckung versehen ist.

Der Hauptvorteil der Erfindung liegt darin, daß der Rotationsantrieb des Spießes selbsttätig ist und keine weitere Energiequelle verlangt. Es werden die thermodynamischen Wirkungen des Gasstromes ausgenutzt, der aus dem Manteloberteil heraustritt und zu überwiegendem Teil aus erwärmter Luft besteht, welche in den Mantelraum durch die Stirnöffnung angesaugt wird. Ein weiterer Vorteil der erfindungsgemäßen Bratrostlösung ergibt sich aus der Unterbringung der Heizquelle für festen Brennstoff an der Mantelinnenwand und durch deren Ausbildung als herausnehmbares Magazin aus dem Gitterwerk. Dieses Magazin kann aus seiner Halterung im Gehäuse mittels des Handgriffes jederzeit herausgenommen und der feste Brennstoff durch schwenkende Handbewegungen intensiv belüftet werden. Nach der Brennstoffentfachung kann das Magazin in seine Halterung im Mantelinnenraum des Bratrostes zurückgelegt werden, wodurch der Röstprozeß ohne weitere Hilfsmittel wesentlich beschleunigt wird. Ein Vorteil dieses Bratrostes liegt auch darin, daß das aus dem Bratgut abtropfende Fett und dessen Saft nicht in den Feuerraum gelangen und keine Geruchsbelästigung der Umgebung verursachen. Das Fett und der Saft werden in einem Fänger aufgefangen, der unterhalb des Spießes untergebracht ist.

Im folgenden wird ein bevorzugtes Ausführungsbeispiel der Erfindung anhand der Zeichnung ausführlich beschrieben. Es zeigen:

Fig. 1 einen Schnitt schematisch durch einen Bratrost im Aufriß;

Fig. 2 eine schematische Seitenansicht des Schaufelrads;

Fig. 3 eine Draufsicht auf den Bratrostkörper mit dem Schaufelrad.

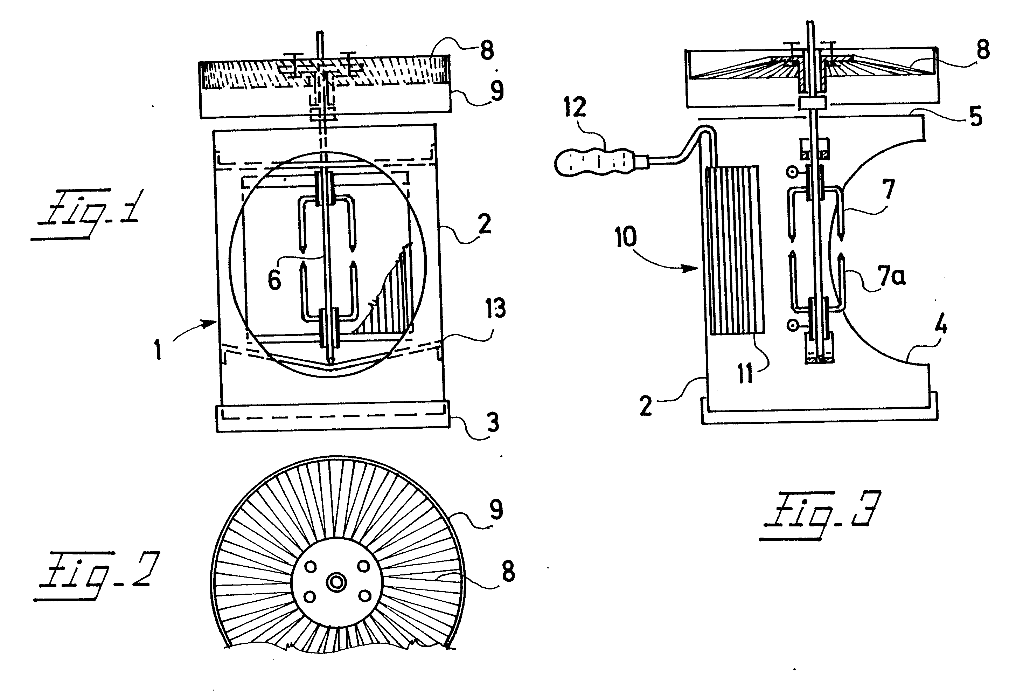

Der dargestellte Bratrost 1 enthält ein Gehäuse 2 mit einem festen Boden 3, der eine stabile Unterlage bildet. In einem Teil des Gehäuses 2 ist ein ovaler Lufteintritt 4 vorgesehen. Das Gehäuse hat oben einen offenen Gasauslaß 5 für die aus dem Innenraum des Bratrostes 1 heraustretenden erwärmten Gase. Im Innenraum ist ein drehender Spieß 6 vertikal angeordnet, welcher mit zwei Sätzen von Dornen 7, 7a zur Halterung der zu röstenden Ware versehen ist. Ein verlängerter Teil der Spießwelle 6 durchragt den Gasauslaß 5 und trägt ein Schaufelrad 8, dessen Durchmesser etwa dem des Gehäusemantels 2 entspricht. Das Schaufelrad 8 weist an seinem Umfang eine ringförmige Blechabdeckung 9 auf, welche den ästhetischen Eindruck verbessert und die Wirkung der thermodynamischen Strömung in den Raum des Schaufelrades 8 erhöht.

An der Innenwand des Mantelgehäuses 2 befindet sich ein Feuerraum 10, der vorteilhaft als herausnehmbares Magazin 11 aus einem Gitterwerk ausgeführt ist. Dieses Magazin 11 ist mit festem Brennstoff, insbesondere Holzkohle, gefüllt und bildet den Heizkörper Zur einfachen Manipulation des Magazins 11 ist an seinem Oberteil ein Handgriff 12 befestigt, welcher aus dem Gehäusemantel 12 herausragt und ein Anblasen der Glut auch außerhalb des Gehäuses ermöglicht. Die herausnehmbare Ausbildung des Magazins 11 ist vorteilhaft, weil sie eine einfache Füllung und Entleerung des Magazins sowie einen vollkommenen Zugang der Luft zum Brennstoff ermöglicht. Unter dem Feuerraum 10 und unterhalb des rotierenden Spießes 6 ist ein schalenförmiger Fettfänger 13 ausnehmbar untergebracht, der gleichzeitig ein Auflager für das untere Ende der Spießwelle bildet. Im oberen Teil des Gehäusemantels 2 befindet sich eine Querstrebe 14, deren Mittelöffnung von der Spießwelle durchragt wird. Diese Querstrebe 14 dient der drehbaren Halterung des vertikalen Spießes und kann zusammen mit diesem aus dem Gehäuse 2 herausgenommen werden.

Die Arbeitsweise des beschriebenen Bratrostes 1 ist folgende: Nach Aufspannen der zu röstenden Ware zwischen den beiden Dornsätzen 7, 7a und nach Durchglühen des Brennstoffes wird der Spieß 6 selbsttätig durch den Einfluß der aufsteigenden Gase auf das Schaufelrad 8 in Drehung versetzt. Die Umdrehungen des Spießes 6 hängen dabei von der Temperatur der Heizquelle im Magazin 11 ab. Mit der steigenden Brennstofftemperatur erhöht sich auch die Ansaugung der Außenluft in den Lufteintritt 4, was wiederum zu einer höheren Rotationsgeschwindigkeit des Schaufelrades 8 und des Spießes 6 führt und dadurch sich auch der Bratrostprozeß beschleunigt.

Die Erfindung ist nicht auf das beschriebene Ausführungsbeispiel beschränkt. So kann die erfindungsgemäße selbsttätige Rotation des Spießes auch bei Bratrosteinrichtungen mit anderen Heizquellen eingesetzt werden. Ferner können zur Regelung der Drehzahlen des Spießes besondere Mittel, wie Leitelemente im oberen Teil des Mantelgehäuses 2, vorgesehen sein, die eine gezielte Ausrichtung des aufsteigenden Brüdenstroms auf ausgewählte Bereiche des Schaufel rads bewirken, um die Drehgeschwindigkeit des Spießes zu steigern. Andererseits kann durch Ableiten von Teilströmen der Gase direkt in die Umgebungsluft die Drehzahl des Schaufelrads vermindert werden. Schließlich kann der Lufteinlaß auch durch Öffnungen in der Bodenplatte 3 erfolgen, wobei dann die seitliche Öffnung durch eine geeignete Tür bedarfsweise verschlossen wird. Das Schaufelrad 8 kann auch direkt im oberen Teil des Gehäuses angeordnet werden, wodurch sich die Bauhöhe des Bratrosts vermindert.

Liste der angewendeten Bezugszeichen:

1 Bratrost
2 Mantel des Gehäuses
3 fester Boden
4 Lufteintritt
5 Gasauslaßöffnung
6 Spieß
7 Aufnahmedorn
7a Aufnahmedorn
8 Schaufelrad
9 Umfangsabdeckung
10 Feuerraum bzw. Heizquelle
11 Magazin
12 Manipulationshandgriff
13 Fettfänger
14 Quersteg mit Drehlager

**Ansprüche**

1. Bratrost mit einem Lufteinlaßöffnungen und Auslaßöffnungen aufweisenden Mantelgehäuse, in dem ein mit Aufsteckhalterungen für das Bratgut versehener Spieß drehbar gelagert ist, **dadurch gekennzeichnet,** daß ein Schaufelrad (8) den Drehantrieb des Spießes (6) bildet, das von den erhitzten Gasen beaufschlagt und in Drehung versetzt wird.

2. Bratrost nach Anspruch 1, dadurch gekennzeichnet, daß das Schaufelrad (8) auf dem oberen aus dem offenen Mantelgehäuse (2) herausragenden Ende der vertikalen Welle des Spießes (6) lösbar befestigt ist

3. Bratrost nach Anspruch 1 oder 2, dadurch gekennzeichnet, daß die durchgehende vertikale Welle des Spießes (6) in einem unteren Auflager (13), das einen Fettsammler bildet, und in einem oberen Drehlager (14) im hohlzylindrischen Mantelgehäuse gelagert ist.

4. Bratrost nach einem der Ansprüche 1 bis 3, dadurch gekennzeichnet, daß die Heizquelle (10) an der Innenseite des zylindrischen Gehäusemantels (2) angeordnet ist.

5. Bratrost nach einem der Ansprüche 1 bis 4, dadurch gekennzeichnet, daß die Heizquelle (10) ein zur Aufnahme fester Brennstoffe ausgebildetes herausnehmbares Magazin (11) ist, welches mit einem Manipulationshandgriff (11) versehen ist.

6. Bratrost nach einem der Ansprüche 1 bis 5, dadurch gekennzeichnet, daß das Schaufelrad (8) mit einer ringförmigen Umfangsabdeckung (9) versehen ist.

_Fig. 1_

_Fig. 2_

_Fig. 3_

EP 0 352 414 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-668449 (PION)<br>* das ganze Dokument * | 1-4, 6 | A47J37/04<br>A47J37/07 |
| Y | | 5 | |
| | --- | | |
| Y | FR-A-613613 (ROCHER)<br>* das ganze Dokument * | 5 | |
| A | | 1-4, 6 | |
| | --- | | |
| X | BE-A-554483 (ETS. J.P.BLIN)<br>* das ganze Dokument * | 1-4, 6 | |
| | --- | | |
| A | DE-C-4061 (DEJEY ET AL)<br>* das ganze Dokument * | 1, 2,<br>4-6 | |
| | --- | | |
| A | CH-A-544535 (GUHL)<br>--- | | |
| A | DE-A-1919774 (ELLBAU ELEKTROTECHNIK APPARATEBAU HINTZE UND MENTZEL)<br>--- | | |
| A | FR-A-1007319 (BLAIME)<br>----- | | |

**RECHERCHIERTE SACHGEBIETE (Int. Cl.5)**

A47J

Der vorliegende Recherchenbericht wurde für alle Patentansprüche erstellt

| Recherchenort | Abschlußdatum der Recherche | Prüfer |
|---|---|---|
| DEN HAAG | 06 NOVEMBER 1989 | MEINDERS H. |